(19)

**Europäisches Patentamt**
**European Patent Office**
**Office européen des brevets**

(11) **EP 4 568 269 A1**

(12) **EUROPEAN PATENT APPLICATION**

(43) Date of publication:
**11.06.2025 Bulletin 2025/24**

(21) Application number: **23214391.7**

(22) Date of filing: **05.12.2023**

(51) International Patent Classification (IPC):
**H04Q 11/00** (2006.01)

(52) Cooperative Patent Classification (CPC):
**H04Q 11/0067; H04Q 2011/0086**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nokia Solutions and Networks Oy
02610 Espoo (FI)**

(72) Inventors:
- **TSIAFLAKIS, Paschalis
  2223 Schriek (BE)**
- **SILLIS, Yannick
  2390 Malle (BE)**

(74) Representative: **IP HILLS NV
Bellevue 5/501
9050 Gent-Ledeberg (BE)**

(54) **APPARATUS AND METHOD FOR DYNAMIC BANDWIDTH-PROPORTIONAL FAIRNESS ASSIGNMENT IN PASSIVE OPTICAL NETWORKS**

(57)    Example embodiments describe an optical line terminal (110), OLT, configured to communicate in a passive optical network (100), PON, with optical network units (130, 140, 150), ONUs; wherein the OLT comprises means configured to dynamically assign bandwidth to traffic-bearing entities (131, 132, 141, 151, 152, 153) within the ONUs by allocating upstream transmission opportunities (133, 142, 143, 144, 154, 155) to the traffic-bearing entities based on bandwidth demands (211) of the respective traffic-bearing entities and on one or more service parameters of the respective traffic-bearing entities; wherein an assigned bandwidth of a traffic-bearing entity comprises a guaranteed assigned bandwidth (221) and a non-guaranteed assigned bandwidth (224); and wherein the means are further configured to perform, if a sum of the bandwidth demands of the traffic-bearing entities within the PON exceeds an effective available bandwidth of the PON, assigning (203), to respective unsaturated traffic-bearing entities having bandwidth demands that exceed the guaranteed assigned bandwidths, non-guaranteed assigned bandwidths (224) proportional to the bandwidth demands.

$$S_{BW} = C - \sum_{\forall i \in PON} BW_G^i$$

$$BW_{NG}^i = S_{BW} \times \frac{BW_d^i - min(R_F^i + R_A^i, BW_d^i)}{\sum_j BW_d^j - min(R_F^j + R_A^j, BW_d^j)}$$

Fig. 3

EP 4 568 269 A1

**Description**

**Field of the Invention**

Various example embodiments relate to an apparatus and a method for dynamic bandwidth assignment in a passive optical network.

**Background of the Invention**

Dynamic bandwidth assignment, DBA, is a functionality in passive optical networks, PONs, that dynamically allocates upstream transmission opportunities to traffic-bearing entities of optical network units, ONUs. An operator typically provisions one or more service parameters for a traffic flow that ensures the quality of service by imposing constraints on the assigned bandwidth and the latency. The assigned bandwidth or assigned data rate of a traffic flow is typically determined based on the current activity of the traffic-bearing entities, i.e. the bandwidth demand, and the bandwidth-related service parameters, e.g. fixed bandwidth, assured bandwidth, and maximum bandwidth.

The assigned bandwidth typically includes a guaranteed bandwidth portion and an additional bandwidth portion, also referred to as non-guaranteed bandwidth portion. The non-guaranteed bandwidth portion is assigned after assigning the guaranteed bandwidth portion to the traffic-bearing entities, and is only assigned to unsaturated traffic-bearing entities for which the guaranteed bandwidth portion is insufficient to fulfil their bandwidth demand. Assigning the non-guaranteed bandwidth typically comprises dividing the remaining available bandwidth of the PON among the unsaturated traffic-bearing entities according to a fairness condition, e.g. according to the fairness conditions of the ITU-T G.9807.1 standard.

**Summary of the Invention**

The scope of protection sought for various embodiments of the invention is set out by the independent claims. The embodiments and features described in this specification that do not fall within the scope of the independent claims, if any, are to be interpreted as examples useful for understanding various embodiments of the invention.

Amongst others, it is an object of embodiments of the invention to improve the dynamic bandwidth assignment of the additional bandwidth portion of the assigned bandwidth, also referred to as non-guaranteed assigned bandwidth.

This object is achieved, according to a first example aspect of the present disclosure, by an optical line terminal, OLT, configured to communicate in a passive optical network, PON, with optical network units, ONUs; wherein the OLT comprises means configured to dynamically assign bandwidth to traffic-bearing entities within the ONUs by allocating upstream transmission opportunities to the traffic-bearing entities based on bandwidth demands of the respective traffic-bearing entities and on one or more service parameters of the respective traffic-bearing entities; wherein an assigned bandwidth of a traffic-bearing entity comprises a guaranteed assigned bandwidth and a non-guaranteed assigned bandwidth; and wherein the means are further configured to perform, if a sum of the bandwidth demands of the traffic-bearing entities within the PON exceeds an effective available bandwidth of the PON: assigning, to respective unsaturated traffic-bearing entities having bandwidth demands that exceed the guaranteed assigned bandwidths, non-guaranteed assigned bandwidths proportional to the bandwidth demands.

The effective available bandwidth of the PON is the total available bandwidth of the upstream interface for allocating upstream transmission opportunities excluding or including overhead. The PON is congested if the sum of the bandwidth demands of the traffic-bearing entities within the PON, i.e. the total bandwidth demand, exceeds the effective available bandwidth of the PON.

When operating in a congested mode, non-guaranteed assigned bandwidths are assigned to unsaturated traffic-bearing entities proportional to the bandwidth demands of the respective unsaturated traffic-bearing entities. In other words, the non-guaranteed assigned bandwidth assigned to an unsaturated traffic-bearing entity in addition to the guaranteed assigned bandwidth is proportional to the bandwidth demand of this unsaturated traffic-bearing entity. In doing so, a larger non-guaranteed bandwidth is assigned to unsaturated traffic-bearing entities with a larger bandwidth demand, i.e. higher traffic, compared to unsaturated traffic-bearing entities with a smaller bandwidth demand, i.e. lower traffic. Assigning non-guaranteed assigned bandwidths proportional to the bandwidth demands may be performed for a subset of unsaturated traffic-bearing entities within the PON, or for all unsaturated traffic-bearing entities within the PON.

This bandwidth-proportional bandwidth assignment allows reducing the complexity of dynamic bandwidth assignment as it can be implemented without multi-loop recursion and/or sorting operations which are computationally complex and expensive to execute. This has the advantage that the cost of hardware to perform DBA can be reduced, in particular for systems that support a substantial amount of traffic-bearing entities. It is a further advantage that the responsiveness of DBA can be increased as a lower amount of processor cycles are performed per DBA cycle.

Assigning the non-guaranteed assigned bandwidths proportional to the bandwidth demands further allows to improve the usage of the available PON capacity during congestion, and to equalize the latency incurred due to congestion between the respective traffic-bearing entities. This has the further advantage that substantial quality of service degradation can be avoided on traffic-bearing entities with high bandwidth demands. It is a further advantage that this bandwidth-proportional bandwidth assignment can easily be incorporated into existing PONs as it requires limited software modifications.

According to an example embodiment, the assigning may further comprise assigning non-guaranteed assigned bandwidths to the respective unsaturated traffic-bearing entities that are proportional to a difference between the bandwidth demands of the respective unsaturated traffic-bearing entities and the guaranteed assigned bandwidths of the respective unsaturated traffic-bearing entities.

In other words, the non-guaranteed assigned bandwidth assigned to an unsaturated traffic-bearing entity in addition to the guaranteed assigned bandwidth may be proportional to the bandwidth demand that has not been met by assigning the guaranteed assigned bandwidth. The guaranteed assigned bandwidth may include a fixed bandwidth portion that is assigned to the traffic-bearing entity regardless of its traffic demand, and an assured bandwidth portion that is assigned to the traffic-bearing entity until a provisioned level is reached or the bandwidth demand of the traffic-bearing entity is satisfied. The fixed bandwidth portion and the provisioned level of the assured bandwidth portion are typically provisioned by one or more service parameters, e.g. the fixed bandwidth $R_F$ and the assured bandwidth $R_A$ according to the ITU-T G.9807.1 standard.

According to an example embodiment, the means may further be configured to perform determining the non-guaranteed assigned bandwidths for the respective unsaturated traffic-bearing entities by a single loop recursion over the respective traffic-bearing entities within the PON.

This allows determining the non-guaranteed assigned bandwidths in a computationally efficient and energy-efficient manner, as computationally complex and expensive multi-loop recursion can be avoided. This has the further advantage that it can reduce the cost of hardware that performs DBA, and/or that it can increase the responsiveness of DBA as a lower number of processor cycles are performed per DBA cycle.

According to an example embodiment, determining the non-guaranteed assigned bandwidths further comprises performing the single loop recursion over the respective traffic-bearing entities in an unordered sequence.

Thus, the order in which the single loop recursion loops over the respective traffic-bearing entities is irrelevant for the determined non-guaranteed assigned bandwidths. This allows determining the non-guaranteed assigned bandwidths in a computationally efficient and energy-efficient manner, as computationally complex and expensive sorting operations can be avoided. This has the further advantage that it can further reduce the cost of hardware that performs DBA, and/or that it can increase the responsiveness of DBA as a lower number of processor cycles are performed per DBA cycle.

According to an example embodiment, determining the non-guaranteed assigned bandwidths further comprises determining a surplus bandwidth pool indicative for a portion of the effective available bandwidth of the PON that remains after assigning the guaranteed assigned bandwidths to the respective traffic-bearing entities; and distributing the surplus bandwidth pool among the unsaturated traffic-bearing entities as the non-guaranteed assigned bandwidths.

Thus, the surplus bandwidth pool may be the portion of the effective available bandwidth of the PON that has not yet been assigned after assigning the fixed bandwidth portions and the assured bandwidth portions to the respective traffic-bearing entities within the PON. Assigning the non-guaranteed assigned bandwidths to the unsaturated traffic-bearing entities may thus comprise distributing the surplus bandwidth pool proportional to the bandwidth demand of the respective unsaturated traffic-bearing entities.

According to an example embodiment, the single loop recursion may further comprise, for a respective traffic-bearing entity, determining the non-guaranteed assigned bandwidth as a portion of the surplus bandwidth pool proportional to a ratio; wherein a numerator of the ratio comprises a difference between the bandwidth demand of the respective traffic-bearing entity and the guaranteed assigned bandwidth of the respective traffic-bearing entity, and wherein a denominator of the ratio comprises a sum of respective differences between the bandwidth demands and the guaranteed assigned bandwidths of the unsaturated traffic bearing entities.

According to an example embodiment, the means may further be configured to perform determining the bandwidth demand of a respective traffic-bearing entity as the bandwidth that depletes a data queue of the respective traffic-bearing entity within a fixed time.

According to an example embodiment, the means may further be configured to perform determining the bandwidth demand of a respective traffic-bearing entity based on a reported buffer occupancy of the respective traffic-bearing entity, and/or based on data transmitted from the respective traffic-bearing entity to the OLT.

The reported buffer occupancy of a respective traffic-bearing entity may be obtained through logical buffer occupancy reports that are solicited by the OLT and provided by an ONU, e.g. dynamic bandwidth report upstream, DBRu, according to the ITU-T G.9807.1 standard. This reported buffer occupancy provides the OLT with status information of the data queue in a respective traffic-bearing entity, e.g. queue fill or queue size. This allows determining the bandwidth demand of the traffic-bearing entity.

Alternatively or complementary, the bandwidth demand of a traffic-bearing entity may be inferred from the data transmitted from a traffic-bearing entity to the OLT during a transmission opportunity allocated to that traffic-bearing entity.

In other words, the means of the OLT may be configured to monitor the upstream optical signals transmitted by the respective traffic-bearing entities to determine or estimate the bandwidth demands. The transmitted data that is monitored may include payload data, e.g. by measuring an amount of payload data transmitted during one or more transmission opportunities, and/or idle data, e.g. by comparing the amount of idle XGEM frames with the bandwidth maps.

According to an example embodiment, assigning non-guaranteed assigned bandwidths may be limited to unsaturated traffic-bearing entities having a service parameter indicative for being eligible for non-assured bandwidth assignment and/or best-effort bandwidth assignment.

For example, the bandwidth-proportional bandwidth assignment may be limited to traffic-bearing entities that are provisioned with a service parameter 'ternary eligibility indicator for additional bandwidth assignment' $\chi_{AB}$ according to the ITU-T G.9807.1 standard that is set to 'non-assured' or 'best-effort', thereby indicating that the traffic-bearing entity is eligible for non-assured bandwidth assignment or best-effort bandwidth assignment.

According to an example embodiment, assigning non-guaranteed assigned bandwidths may be limited to unsaturated traffic-bearing entities having a service parameter indicative for being eligible for bandwidth-proportional bandwidth assignment.

Thus, traffic-bearing entities may be provisioned with a dedicated service parameter indicating that the traffic-bearing entity is eligible for assigning the non-guaranteed assigned bandwidth proportional to the bandwidth demands during congestion of the PON.

According to an example embodiment, the means are further configured to perform assigning non-guaranteed assigned bandwidths proportional to the bandwidth demands if a configuration parameter has a predetermined value.

In other words, the configuration parameter allows enabling or disabling the bandwidth-proportional bandwidth assignment for the PON.

According to an example embodiment, the means include a dynamic bandwidth allocation, DBA, engine.

The DBA engine, also referred to as DBA functional module, may execute a DBA algorithm to implement a DBA model that defines how the bandwidth for the traffic-bearing entities is determined, e.g. according to the reference DBA model of the ITU-T G.9807.1 standard. The DBA engine may further determine the size and timing of the upstream transmission opportunities such that the determined bandwidth is assigned to the traffic-bearing entities.

According to a second example aspect, a computer-implemented method is disclosed comprising, if a sum of bandwidth demands of traffic-bearing entities within optical network units, ONUs, within a passive optical network, PON, exceeds an effective available bandwidth of the PON:

- assigning, to respective unsaturated traffic-bearing entities having bandwidth demands that exceed guaranteed assigned bandwidths, non-guaranteed assigned bandwidths proportional to the bandwidth demand of the respective unsaturated traffic-bearing entities; and

wherein an optical line terminal, OLT, configured to communicate with the ONUs in the PON, comprises means configured to dynamically assign bandwidth to traffic-bearing entities within the ONUs by allocating upstream transmission opportunities to the traffic-bearing entities based on a bandwidth demand of the respective traffic-bearing entities and one or more service parameters of the respective traffic-bearing entities; and wherein an assigned bandwidth of a traffic-bearing entity comprises a guaranteed assigned bandwidth and a non-guaranteed assigned bandwidth.

According to a third example aspect, a data processing system is disclosed configured to perform the computer-implemented method according to the second aspect.

According to a fourth example aspect, a computer program product is disclosed comprising computer-executable instructions which, when the program is executed by a computer, cause the computer to perform the computer-implemented method according to the second aspect.

### Brief Description of the Drawings

Fig. 1 shows a schematic block diagram of an example passive optical network with dynamic bandwidth assignment;

Fig. 2 shows steps performed by a typical dynamic bandwidth assignment algorithm and the resulting assigned bandwidths;

Fig. 3 shows steps of a computer-implemented method for assigning non-guaranteed assigned bandwidths proportional to the bandwidth demands of unsaturated traffic-bearing entities, according to example embodiments; and

Fig. 4A shows experimental validation results of the bandwidth-proportional fairness condition according to example embodiments compared to legacy fairness conditions;

Fig. 4B shows the incurred latencies in traffic-bearing entities when applying the bandwidth-proportional fairness condition according to example embodiment compared to applying legacy fairness conditions;

Fig. 5 shows a probability of queue fills for different traffic-bearing entities when applying the bandwidth-proportional fairness condition according to example embodiment compared to applying legacy fairness conditions; and

Fig. 6 shows a suitable computing system enabling to implement embodiments of the computer-implemented method for assigning non-guaranteed assigned bandwidths proportional to the bandwidth demands of respective unsaturated traffic-bearing entities.

## Detailed Description of Embodiment(s)

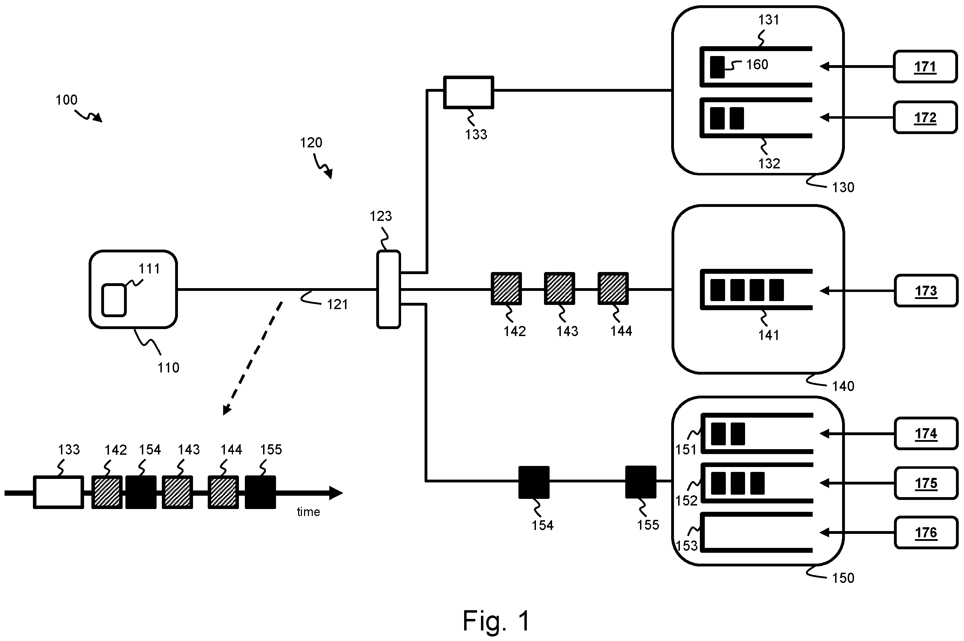

Fig. 1 shows a schematic block diagram of an example passive optical network, PON 100 comprising an optical line terminal, OLT, 110 connected to a plurality of optical network units, ONUs, 130, 140, 150 via an optical distribution network, ODN 120. The ODN 120 may have a tree structure comprising an optical feeder fibre 121, one or more passive optical splitters/multiplexors 123, and a plurality of optical distribution fibres or drop fibres that connect the splitter/multiplexor 123 to the respective ONUs 130, 140, 150. In the downstream, the passive optical splitter/multiplexor 123 splits an optical signal coming from the OLT 110 into lower power optical signals for the connected ONUs 130, 140, 150, while in the upstream direction, the passive optical splitter/multiplexor 123 multiplexes the optical signals coming from the connected ONUs 130, 140, 150 into a burst signal for the OLT 110. In this example, the OLT 110 is connected to three ONUs 130, 140, 150, however, the OLT 110 may be connected to fewer or more nodes.

The passive optical network 100 may be a Gigabit passive optical network, GPON, according to the ITU-T G.984 standard, a 10x Gigabit passive optical network, 10G-PON, according to the ITU-T G.987 standard, a 10G symmetrical XGS-PON according to the ITU-T G.9807 standard, a four-channel 10G symmetrical NG-PON2 according to the ITU-T G.989 standard, a 25GS-PON, a 50G-PON according to the ITU-T G.9804 standard, or a next generation passive optical network, NG-PON. The passive optical network 100 may implement time-division multiplexing, TDM, or time- and wavelength-division multiplexing, TWDM.

In time-division multiplexing, TDM, the telecommunication medium 121 is shared in time between the ONUs 130, 140, 150 in the upstream. To this end, recurrent transmission opportunities 133, 142, 143, 144, 154, 155 are allocated to the respective ONUs 130, 140, 150 during which the respective ONUs 130, 140, 150 are allowed to transmit data to the OLT 110. Transmission opportunities may also be referred to as timeslots or bursts. For example, ONU 140 is allowed to transmit upstream data during the recurrent transmission opportunities 142, 143, 144.

The respective ONUs 130, 140, 150 comprise one or more traffic-bearing entities 131, 132, 141, 151, 152, 153 where data packets 160 originating from a connected service 171 - 176 or application await their turn to be transmitted to the OLT 110. The one or more traffic-bearing entities 131, 132, 141, 151, 152, 153 may be transmission containers, also referred to as T-CONTs. Transmission containers are ONU-objects that represent a group of logical connections within an ONU 130, 140, 150 that appear as a single entity for the purpose of upstream bandwidth assignment in a passive optical network.

The transmitted data during a recurrent transmission opportunity 133, 142, 143, 144, 154, 155 may thus originate from traffic-bearing entities 131, 132, 141, 151, 152, 153 within the associated ONUs 130, 140, 150. A respective traffic-bearing entity 131, 141, 151 is allowed to transmit data to the OLT 110 during a dedicated transmission opportunity 133, 142, 143, 144, 154, 155 that recurs in time, i.e. during a repeating timeslot. In between consecutive transmission opportunities associated with a certain traffic-bearing entity, e.g. 154 and 155, one or more non-overlapping recurrent transmission opportunities associated with different transmission queues may be allocated, e.g. 143 and 144.

Transmission opportunities associated with different traffic-bearing entities within the same ONU, e.g. transmission queues 131 and 132, may occur subsequently (not shown in Fig. 1), i.e. may follow each other in time. This can allow to only transmit one preamble for those subsequent traffic-bearing entities. For example, an upstream burst may include a single preamble for one or more recurrent transmission opportunities associated with different traffic-bearing entities within the same optical network unit, ONU. It will be apparent that the transmission opportunities 133, 142, 143, 144, 154, 155 shown in Fig. 1 are associated with a single traffic-bearing entity in the respective ONUs 130, 140, 150.

The recurrent transmission opportunities 133, 142, 143, 144, 154, 155 may be allocated by dynamic bandwidth assignment, DBA, sometimes also referred to as dynamic bandwidth allocation. To this end, the OLT 110 may comprise a DBA engine 111 or DBA functional module that executes a DBA algorithm. The DBA engine 111 may determine or estimate a buffer occupancy of the traffic-bearing entities 131, 132, 141, 151, 152, 153 by collecting in-band status reports, by monitoring upstream frames, or both. The DBA algorithm may implement a DBA model that defines how the assigned bandwidth for the traffic-bearing entities 131, 132, 141, 151, 152, 153 is to be determined, e.g. according to the reference DBA model of the ITU-T G.9807.1 standard. The DBA engine 111 typically also determines the size and timing of the upstream transmission opportunities 133, 142, 143, 144, 154, 155 such that the determined bandwidths are allocated to the traffic-bearing entities 131, 132, 141, 151, 152, 153. The transmission opportunities are then communicated to the ONUs in-band within a bandwidth map.

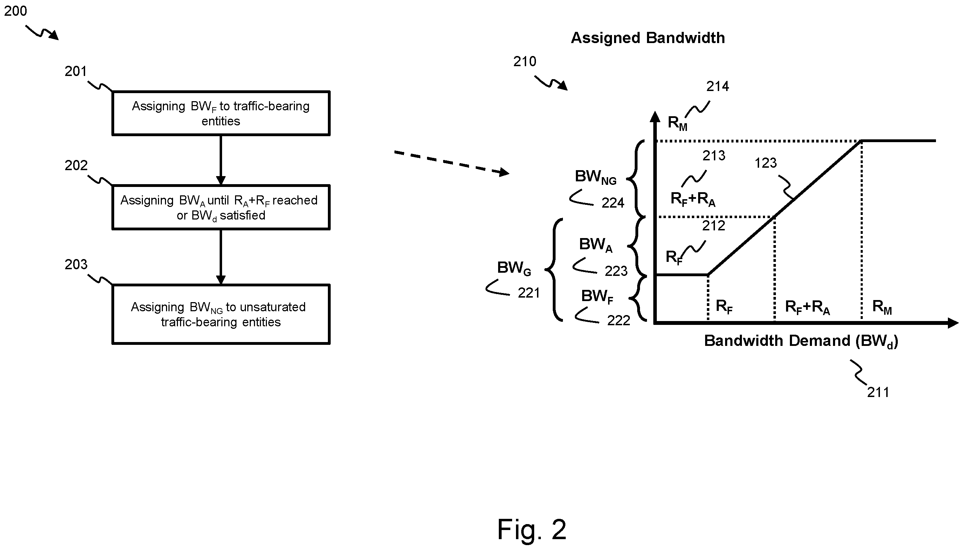

Fig. 2 shows steps 200 performed by a typical DBA algorithm and the resulting assigned bandwidths 210. A typical DBA algorithm implements, for example, the DBA reference model of the ITU-T G9807.1 standard. In a first step 201, a fixed bandwidth 222 is assigned to all traffic-bearing entities in the PON according to a fixed bandwidth service parameter $R_F$ 212. The fixed bandwidth $BW_F$ 222 is assigned regardless of the bandwidth demand 211 of the traffic-bearing entities. In a following step 202, an assured bandwidth $BW_A$ 223 may be assigned on top of the fixed bandwidth $BW_F$ 222 if the fixed bandwidth $BW_F$ 222 does not satisfy the bandwidth demand 211 of the traffic-bearing entities. The assured bandwidth $BW_A$ 223 is upper bound by a provisioned level, i.e. $R_F + R_A$ 213, according to an assured bandwidth service parameter $R_A$. The fixed bandwidth $BW_F$ 222 and the assured bandwidth $BW_A$ 223 together are typically referred to as the guaranteed assigned bandwidth 221 $BW_G = BW_F + BW_A$.

If the guaranteed assigned bandwidth $BW_G$ 221 still does not satisfy the bandwidth demand 211 of a traffic-bearing entity, a non-guaranteed bandwidth $BW_{NG}$ 224 may be assigned in step 203. Such a traffic-bearing entity may be referred to as an unsaturated traffic-bearing entity. The non-guaranteed bandwidth $BW_{NG}$ 224 may also be referred to as the additional bandwidth 224. The non-guaranteed bandwidth $BW_{NG}$ 224 is upper bound by a provisioned level, i.e. the maximum bandwidth 214. The maximum bandwidth for a traffic-bearing entity is typically provisioned as a maximum bandwidth service parameter $R_M$ 214. The non-guaranteed bandwidth $BW_{NG}$ 224 typically includes non-assured bandwidth or best-effort bandwidth. Non-assured bandwidth has a higher priority than best-effort bandwidth. If the PON bandwidth capacity that remains after assigning the guaranteed bandwidth $BW_G$ 221 is insufficient to satisfy the bandwidth demand 211 of the traffic-bearing entities by assigning non-assured bandwidth and/or best-effort bandwidth, i.e. when there is congestion in the PON, a fairness model is applied to fairly distribute the remaining PON bandwidth capacity among the unsaturated traffic-bearing entities.

For example, the fairness model or fairness condition according to the ITU-T G.9807.1 standard assigns non-assured bandwidth to unsaturated traffic-bearing entities in proportion to the sum of the fixed and assured bandwidths, i.e. $R_F + R_A$. The same standard assigns best-effort bandwidth to unsaturated traffic-bearing entities in proportion to the non-guaranteed portion of the unsaturated traffic-bearing entity's provisioned maximum bandwidth, i.e. $R_M - (R_F + R_A)$.

A problem with existing fairness models or fairness conditions in congested mode is that the DBA algorithms that implement these fairness conditions are highly complex as they require multi-loop recursion or sorting operations. These operations are computationally heavy and expensive which increases the cost of the hardware needed to execute the DBA algorithms. A further problem with existing fairness conditions in practically implemented DBA algorithms is that a substantial portion of the bandwidth capacity of the PON is not assigned in congested mode, thereby under-utilizing the PON capacity under congestion. A further problem is that the latency incurred by the congestion differs substantially between the different traffic-bearing entities in the PON. In other words, some traffic-bearing entities will be impacted severely by the congestion, i.e. large latencies and queue sizes, while the impact on other traffic-bearing entities will be limited. This unfair distribution results in unacceptable quality of service degradation in some traffic-bearing entities. A further problem is that the existing fairness conditions under-allocate bandwidth to traffic-bearing entities that have a high bandwidth demand.

These problems are addressed and at least partially solved by a fairness model or fairness condition for assigning non-guaranteed bandwidth to unsaturated traffic-bearing entities in a congested PON according to the present disclosure, also referred to as bandwidth-proportional bandwidth assignment or bandwidth-proportional fairness. In other words, example embodiments of the present disclosure may be implemented in step 203 of a typical DBA algorithm. To this end, an OLT comprises means configured to dynamically assign bandwidth to traffic-bearing entities within ONUs by allocating upstream transmission opportunities to the traffic-bearing entities based on bandwidth demands of the respective traffic-bearing entities and on one or more service parameters of the respective traffic-bearing entities. These means may, for example, be a DBA engine or DBA functional module. The means are further configured to perform, if a sum of the bandwidth demands of the traffic-bearing entities within the PON exceeds an effective available bandwidth of the PON, assigning non-guaranteed bandwidths to respective unsaturated traffic-bearing entities proportional to the bandwidth demands of the unsaturated traffic-bearing entities. Thus, for unsaturated traffic-bearing entities $i$ and $j$, the non-guaranteed bandwidths $BW_{NG}^i$ and $BW_{NG}^j$ are assigned such that

$$\frac{BW_{NG}^i}{BW_d^i} = \frac{BW_{NG}^j}{BW_d^j} \qquad\qquad (Eq.\ 1)$$

wherein $BW_d^i$ and $BW_d^j$ express the bandwidth demand of unsaturated traffic-bearing entities *i* and *j* respectively.

In doing so, a larger non-guaranteed bandwidth is assigned to unsaturated traffic-bearing entities with a larger bandwidth demand, i.e. higher traffic, compared to unsaturated traffic-bearing entities with a smaller bandwidth demand, i.e. lower traffic. This bandwidth-proportional bandwidth assignment under congestion allows reducing the complexity of dynamic bandwidth assignment as this fairness condition can be implemented without computationally complex and expensive sorting operations and/or multi-loop recursive approaches. This has the advantage that the cost of hardware that performs DBA can be reduced. It is a further advantage that the responsiveness of DBA can be increased, e.g. by a shorter DBA cycler, as a lower amount of processor cycles are performed per DBA cycle. These advantages are particularly advantageous for systems that support a substantial amount of traffic-bearing entities, e.g. hundreds or thousands of traffic-bearing entities.

Assigning the non-guaranteed assigned bandwidths proportional to the bandwidth demands further allows to improve the usage of the available PON capacity during congestion. For example, implementing the fairness conditions according to the ITU-T G.9807.1 standard as described above, may result in an average PON capacity loss of up to 14% during congestion in practically implemented DBA algorithms. Assigning the non-guaranteed assigned bandwidth proportional to the bandwidth demands ensures around 100% PON capacity usage during congestion, even in DBA algorithms implemented in practice

Assigning the non-guaranteed assigned bandwidths proportional to the bandwidth demands further allows equalizing the latency incurred due to the congestion between the traffic-bearing entities. This has the further advantage that substantial quality of service degradation can be avoided on traffic-bearing entities with high bandwidth demands. It is a further advantage that assigning the non-guaranteed assigned bandwidths proportional to the bandwidth demands results in a larger assigned bandwidth for traffic-bearing entities with a high bandwidth demand. It is a further advantage that this bandwidth-proportional bandwidth assignment can easily be incorporated into existing PONs as it requires limited software modifications, e.g. modifications to the DBA algorithm.

Assigning the non-guaranteed assigned bandwidths 224 may further comprise assigning non-guaranteed assigned bandwidths 224 that are proportional to a difference between the bandwidth demands 221 of the unsaturated traffic-bearing entities and the guaranteed assigned bandwidths 221 of the respective unsaturated traffic-bearing entities. In other words, the non-guaranteed assigned bandwidth 224 assigned to an unsaturated traffic-bearing entity may be proportional to the bandwidth demand 211 that has not been met by assigning the guaranteed assigned bandwidth 221, i.e. by assigning the fixed bandwidth 222 and the assured bandwidth 223. Thus, for unsaturated traffic-bearing entities *i* and *j,* the non-guaranteed bandwidths $BW_{NG}^i$ and $BW_{NG}^j$ may be assigned such that

$$\frac{BW_{NG}^i}{BW_d^i - BW_G^i} = \frac{BW_{NG}^j}{BW_d^j - BW_G^j} \qquad\qquad (Eq.\ 2)$$

wherein $BW_G^i = \min\left(R_F^i + R_A^i; BW_d^i\right)$ and $BW_G^j = \min\left(R_F^j + R_A^j; BW_d^j\right)$.

Assigning the non-guaranteed assigned bandwidth proportional to the bandwidth demands, e.g. according to Eq. 1 or Eq. 2, may further be limited to unsaturated traffic-bearing entities that are provisioned with a certain service parameter. This service parameter can be an existing service parameter that indicates that a traffic-bearing entity is eligible for non-assured bandwidth assignment and/or best-effort bandwidth assignment. For example, the bandwidth-proportional bandwidth assignment may be limited to traffic-bearing entities that are provisioned with a service parameter 'ternary eligibility indicator for additional bandwidth assignment' $\chi_{AB}$ according to the ITU-T G.9807.1 standard. This service parameter can have the value 'non-assured', 'best-effort', or 'none' thereby respectively indicating that the traffic-bearing entity is eligible for non-assured bandwidth assignment, best-effort bandwidth assignment, or neither. Thus, assigning non-guaranteed assigned bandwidths proportional to the bandwidth demands may be performed for a subset of unsaturated traffic-bearing entities within the PON, i.e. having a service parameter indicative for being eligible therefore. Alternatively, all unsaturated traffic-bearing entities within the PON may be assigned non-guaranteed assigned bandwidths proportional to the bandwidth demands.

Alternatively or complementary, the traffic-bearing entities can be provisioned with a dedicated service parameter indicating that the traffic bearing entity is eligible for the bandwidth-proportional bandwidth assignment. This dedicated service parameter can be provisioned in addition to typical service parameters, e.g. according to the ITU-T G.9807.1 standard. This dedicated service parameter may, for example, have the value 'enable' and 'disable' thereby respectively indicating that the traffic-bearing entity is eligible for bandwidth-proportional bandwidth assignment or not. This allows enabling or disabling the bandwidth-proportional assignment for individual traffic-bearing entities. Additionally, a configuration parameter may be introduced that allows enabling or disabling the bandwidth-proportional bandwidth assignment for the entire PON. When disabling the bandwidth-proportional bandwidth assignment the PON may, for example, operate in a legacy mode during which non-assured bandwidth and best-effort bandwidth are assigned according to the ITU-T G.9807.1 standard. When enabling the bandwidth-proportional bandwidth assignment the PON may assign non-guaranteed assigned bandwidths proportional to the bandwidth demands to unsaturated traffic-bearing entities eligible therefore.

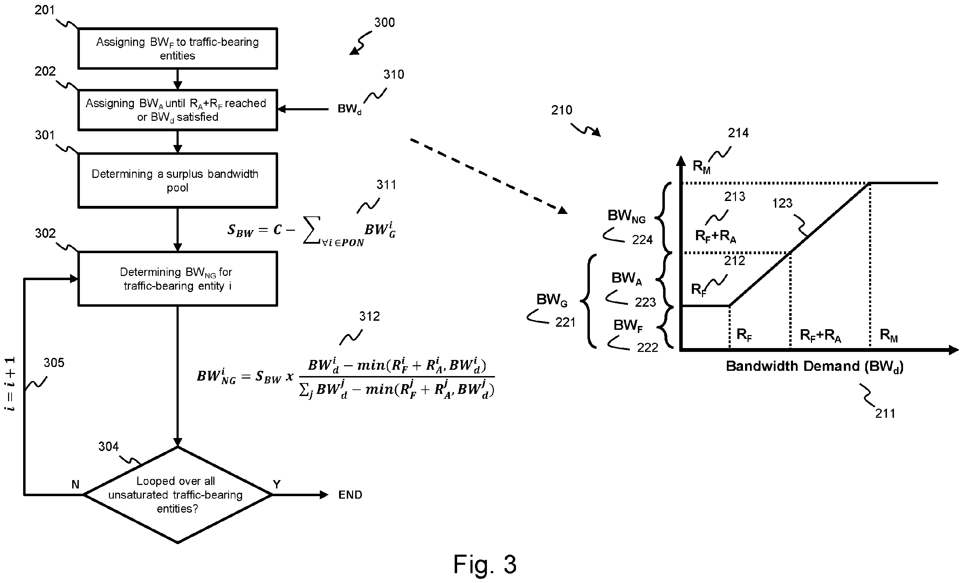

Fig. 3 shows steps 300 of a computer-implemented method for assigning the non-guaranteed assigned bandwidth proportional to the bandwidth demand according to example embodiments. In a first step 201 and a second step 202, the guaranteed assigned bandwidth $BW_G$ 221 may be assigned to the respective traffic bearing entities by assigning the fixed bandwidth $BW_F$ 222 and the assured bandwidth $BW_A$ 223, e.g. according to the ITU-T G.9807.1 standard as discussed above in relation to Fig. 2.

The bandwidth demand 310 of the respective traffic bearing entities may be determined or estimated as the bandwidth that would deplete a data queue of the respective traffic-bearing entities within a fixed time. To this end, a queue fill or size should be inferred or obtained of the respective traffic-bearing entities. This can be achieved based on a reported buffer occupancy of the respective traffic-bearing entities. Such a reported buffer occupancy may be obtained through logical buffer occupancy reports that are solicited by the OLT and provided by an ONU, e.g. dynamic bandwidth report upstream, DBRu, according to the ITU-T G.9807.1 standard. This reported buffer occupancy provides the OLT with status information of the data queue in a respective traffic-bearing entity, e.g. queue fill or queue size. This allows determining the bandwidth demand of the traffic-bearing entity.

Alternatively or complementary, the queue fill or size of a traffic-bearing entity may be inferred from the data transmitted from a traffic-bearing entity to the OLT during a transmission opportunity allocated to that traffic-bearing entity. In other words, means of the OLT may be configured to monitor the upstream optical signals transmitted by the respective traffic-bearing entities to determine or estimate the bandwidth demands. The transmitted data that is monitored may include payload data, e.g. by measuring an amount of payload data transmitted during one or more transmission opportunities, and/or idle data, e.g. by comparing the amount of idle XGEM frames with the bandwidth maps.

In a following step 301, a surplus bandwidth pool 311 may be determined that is indicative for a portion of the effective available bandwidth of the PON that remains after assigning the guaranteed assigned bandwidths $BW_G$ 221 to the traffic-bearing entities. Thus, the surplus bandwidth pool 311 can be determined as

$$S_{BW} = C - \sum_{\forall i \in PON} BW_G^i \qquad (Eq.\ 3)$$

wherein $S_{BW}$ is the surplus bandwidth pool, C is the effective available bandwidth of the PON, and $\sum_{\forall i \in PON} BW_G^i$ is the sum of the guaranteed assigned bandwidths of all traffic-bearing entities in the PON. Assigning the non-guaranteed assigned bandwidths fairly can then be achieved by distributing the surplus bandwidth pool 311 among the unsaturated traffic-bearing entities.

To this end, in a next step 302, the non-guaranteed assigned bandwidth may be determined for traffic-bearing entity $i = 1$ as proportional to the bandwidth demand 211 of traffic-bearing entity $i$, e.g. by implementing the fairness condition of Eq. 1 or Eq. 2. This can be achieved by determining the non-guaranteed assigned bandwidth $BW_{NG}^i$ for traffic-bearing entity $i$ as

$$BW_{NG}^i = S_{BW} \ x \ \frac{BW_d^i - min(R_F^i + R_A^i, BW_d^i)}{\sum_{j \ge i} BW_d^j - min(R_F^j + R_A^j, BW_d^j)} \qquad (Eq.\ 4)$$

wherein $j$ represents the unsaturated traffic bearing entities. Thus, the non-guaranteed assigned bandwidth $BW_{NG}^i$ may be determined to be a portion of the surplus bandwidth $S_{BW}$ proportional to the unsatisfied bandwidth demand of a traffic-bearing entity $BW_d^i - min(R_F^i + R_A^i, BW_d^i)$ relative to a sum of unsatisfied bandwidth demands of the unsaturated traffic-bearing entities in the PON $\sum_j BW_d^j - min(R_F^j + R_A^j, BW_d^j)$.

Step 302 may then recursively be repeated 305 for each unsaturated traffic-bearing entity in the PON in a single loop recursion. In other words, it may be sufficient to perform step 302 only once for each unsaturated traffic-bearing entity within the PON. This allows determining the non-guaranteed assigned bandwidths in a computationally efficient and energy-efficient manner, as computationally complex and expensive multi-loop recursion can be avoided. This has the further advantage that it can reduce the cost of hardware that performs DBA, and/or that it can increase the responsiveness of DBA as a lower number of processor cycles are performed per DBA cycle.

The single loop recursion 305 may further loop over the respective traffic-bearing entities in an unordered sequence. In other words, the order in which the single loop recursion loops over the respective traffic-bearing entities does not affect the determined non-guaranteed assigned bandwidths. This has the advantage that computationally heavy and expensive sorting operations are not needed before performing the single loop recursion. This allows determining the non-guaranteed assigned bandwidths in a computationally efficient and energy-efficient manner and can further reduce the cost of hardware that performs DBA.

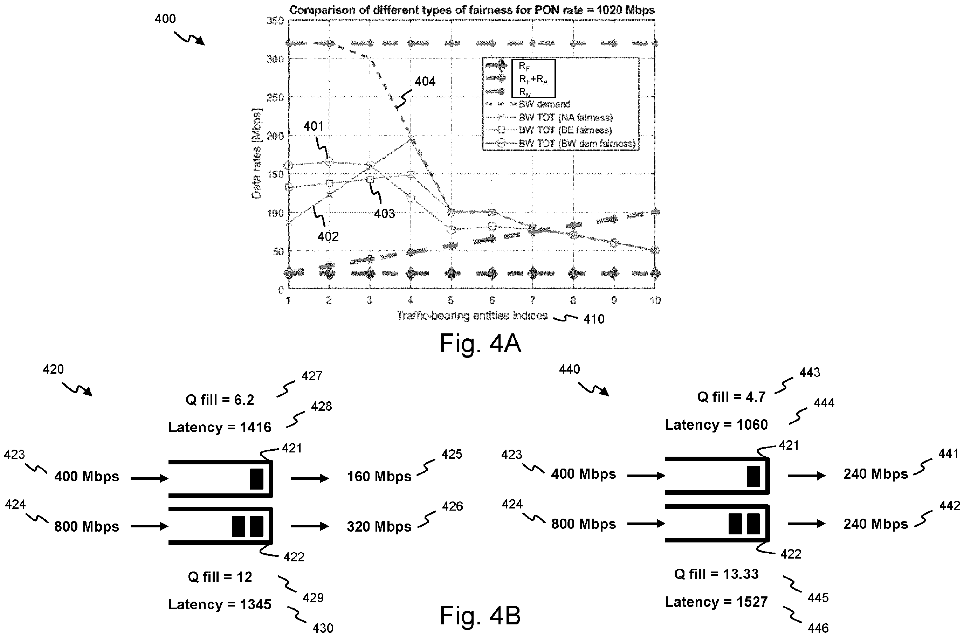

Fig. 4A shows experimental validation results 400 of the bandwidth-proportional fairness condition 401 according to example embodiments compared to fairness conditions according to the ITU-T G.9807.1 standard for both non-assured bandwidth 402 and best-effort bandwidth 403. To this end, the bandwidth assigned to ten different traffic-bearing entities 410 is compared, i.e. T-CONT 1 to 10 shown on the x-axis of Fig. 4A. These T-CONTs are provisioned with the following service parameter values: a fixed bandwidth $R_F$ of 20 Mbps; an assured bandwidth $R_A$ that linearly increases between 0 Mbps for T-CONT 1 and 80 Mbps for T-CONT 10; and a maximum bandwidth $R_M$ of 320 Mbps. The T-CONTs 410 have an estimated bandwidth demand 404 varying between 320 Mbps and 50 Mbps. Curve 401 shows that traffic-bearing entities with high bandwidth demands 404, e.g. T-CONT 1, 2 and 3, are assigned proportionally higher bandwidths by the bandwidth-proportional fairness condition 401 compared to the non-assured bandwidth 402 and best-effort bandwidth 403 fairness conditions according to the ITU-T G.9807.1 standard. T-CONT 1 has a saturated bandwidth demand at 320Mbps, i.e. equal to the maximum bandwidth. This can, for example, occur when a speed test is performed on T-CONT 1. In this case, the bandwidth-proportional fairness condition 401 assigns a substantially higher bandwidth to the T-CONT, i.e. 160 Mbps, compared to the non-assured bandwidth 402 and best-effort bandwidth 403 fairness conditions according to the ITU-T G.9807.1 standard, i.e. 90Mbps and 135Mbps respectively.

Fig. 4B shows the incurred latencies 428, 430, 444, 446 in traffic-bearing entities 421, 422 when applying the bandwidth-proportional fairness condition 420 according to example embodiments compared to the non-assured bandwidth fairness condition 440 according to the ITU-T G.9807.1 standard. Traffic-bearing entities 421, 422 are provisioned with a fixed bandwidth $R_F$ of 0 Mbps; an assured bandwidth $R_A$ of 10 Mbps; and a maximum bandwidth $R_M$ of 400 Mbps. The bandwidth demands 423, 424 of the traffic-bearing entities 421, 422 are 400 Mbps and 800 Mbps, respectively. The traffic-bearing entities 421, 422 receive ethernet packets with an average burst period of 1 ms. The effective available bandwidth capacity of the PON is 480 Mbps, thus there is congestion in the PON.

This results in an assigned bandwidth of 240 Mbps 441, 442 for both traffic-bearing entities 421, 422 when applying the non-assured bandwidth fairness condition 430. A substantial difference between the incurred latency and queue fill of the traffic-bearing entities 421, 422 is further observed with a queue fill 443 of 4.7 units and a latency 444 of 1060 units for traffic-bearing entity 421, and a queue fill 445 of 13.33 units and a latency 446 of 1527 units for traffic-bearing entity 422. The queue fill unit is indicative for the size of a logical buffer or queue within the traffic-bearing entities. The latency unit is indicative for the time it takes a data packet to travel from a source to a destination via the logical buffer or queue.

Contrary, assigning bandwidth according to the bandwidth-proportional fairness condition 420 according to example embodiments results in an assigned bandwidth of 160 Mbps 425 for traffic-bearing entity 421 and 320 Mbps 426 for traffic-bearing entity 422. The incurred latencies are distributed more fairly between the traffic-bearing entities, with a queue fill 427 of 6.2 units and a latency 428 of 1416 units for traffic-bearing entity 421, and a queue fill 429 of 12 units and a latency 430 of 1345 units for traffic-bearing entity 422.

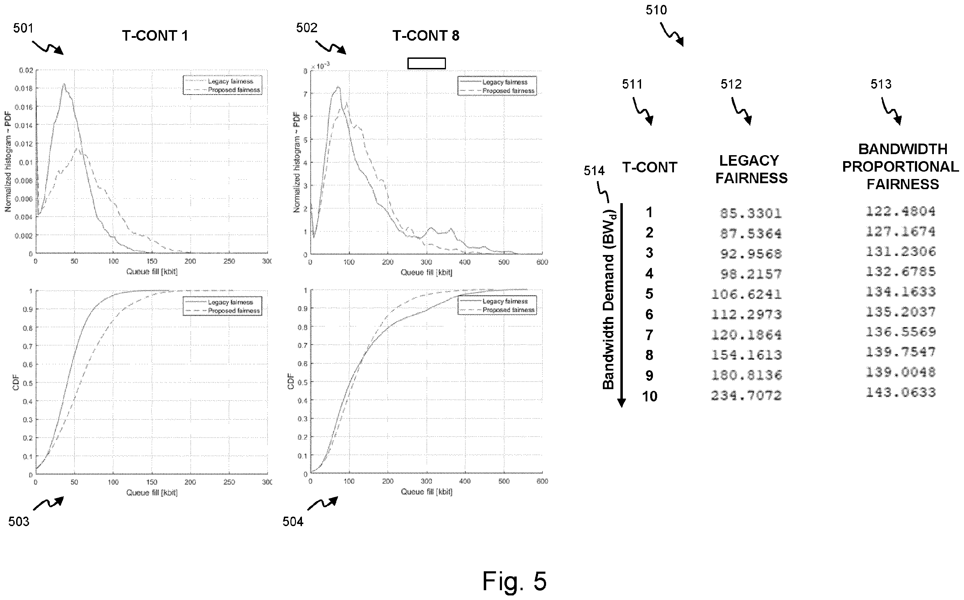

Fig. 5 shows a further comparison between the incurred latencies in traffic-bearing entities 511 when applying the bandwidth-proportional fairness condition, and when applying a legacy fairness condition according to the ITU-T G.9807.1 standard. The bandwidth demand 514 of the T-CONTs 511 linearly increases between 50 Mbps for T-CONT 1 and 100 Mbps for T-CONT 10. The T-CONTs 511 are all provisioned with a fixed bandwidth $R_F$ of 10 Mbps; an assured bandwidth $R_A$ of 0 Mbps; and a maximum bandwidth $R_M$ of 300 Mbps. The effective available bandwidth capacity of the PON is 750 Mbps such that congestion occurs.

Fig. 5 shows an example of the obtained latency for these T-CONTs when applying the legacy fairness condition 512 and the bandwidth-proportional fairness condition 513. This clearly shows that the latency incurred by the T-CONTs 511 is substantially equalized in congestion mode when implementing the bandwidth-proportional fairness condition. Fig. 5 further shows the probability density function 501, PDF, and the cumulative density function 503, CDF, for a traffic-bearing entity with a low bandwidth demand, i.e. T-CONT 1; and the PDF 502 and CDF 504 for a traffic-bearing entity with a high bandwidth demand, i.e. T-CONT 8. The solid curves in 501 - 504 express the probability that a certain queue fill occurs when applying the legacy fairness condition, and the dotted curves express the probability that a certain queue fill occurs when applying the bandwidth-proportional fairness condition. T-CONTs with a relatively small bandwidth demand 514, e.g.

T-CONT 1 shown in 501 and 503, have an increased queue fill for the bandwidth-proportional fairness condition 513. However, in absolute value the queue fill remains relatively low and acceptable for typical quality of service requirements. T-CONTs with a relatively large bandwidth demand 514, e.g. T-CONTs 8 shown in 502 and 504, have a reduced queue fill for the bandwidth-proportional fairness condition 513.

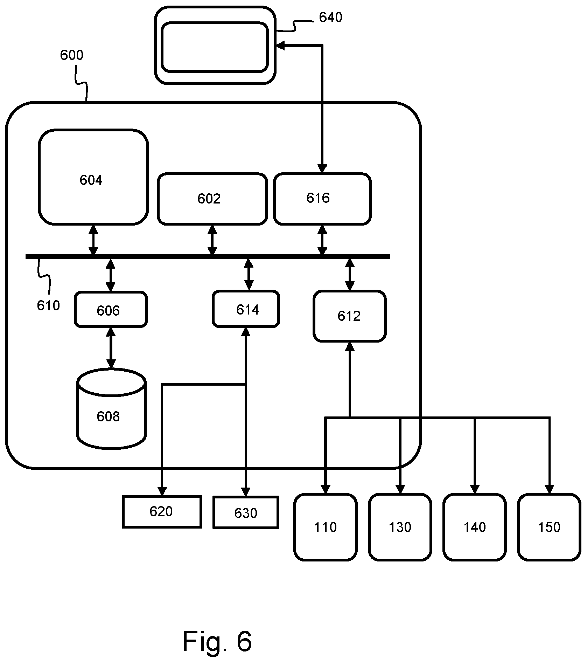

Fig. 6 shows a suitable computing system 600 enabling to implement embodiments of the computer-implemented method for assigning non-guaranteed assigned bandwidths proportional to the bandwidth demands of respective unsaturated traffic-bearing entities. Computing system 600 may in general be formed as a suitable general-purpose computer and comprise a bus 610, a processor 602, a local memory 604, one or more optional input interfaces 614, one or more optional output interfaces 616, a communication interface 612, a storage element interface 606, and one or more storage elements 608. Bus 610 may comprise one or more conductors that permit communication among the components of the computing system 600. Processor 602 may include any type of conventional processor or microprocessor that interprets and executes programming instructions. Local memory 604 may include a random-access memory (RAM) or another type of dynamic storage device that stores information and instructions for execution by processor 602 and/or a read only memory (ROM) or another type of static storage device that stores static information and instructions for use by processor 602. Input interface 614 may comprise one or more conventional mechanisms that permit an operator or user to input information to the computing device 600, such as a keyboard 620, a mouse 630, a pen, voice recognition and/or biometric mechanisms, a camera, etc. Output interface 616 may comprise one or more conventional mechanisms that output information to the operator or user, such as a display 640, etc. Communication interface 612 may comprise any transceiver-like mechanism such as for example one or more Ethernet interfaces that enables computing system 600 to communicate with other devices and/or systems, for example with an OLT 110, and one or more ONUs 130, 140, 150. The communication interface 612 of computing system 600 may be connected to such a source node or destination node by means of a local area network (LAN) or a wide area network (WAN) such as for example the internet. Storage element interface 606 may comprise a storage interface such as for example a Serial Advanced Technology Attachment (SATA) interface or a Small Computer System Interface (SCSI) for connecting bus 610 to one or more storage elements 608, such as one or more local disks, for example SATA disk drives, and control the reading and writing of data to and/or from these storage elements 608. Although the storage element(s) 608 above is/are described as a local disk, in general any other suitable computer-readable media such as a removable magnetic disk, optical storage media such as a CD or DVD, ROM, disk, solid state drives, flash memory cards, etc. could be used. Computing system 600 could thus correspond to the means 110 of OLT 100 as illustrated in Fig. 1.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1.  An optical line terminal (110), OLT, configured to communicate in a passive optical network (100), PON, with optical network units (130, 140, 150), ONUs; wherein the OLT comprises means configured to dynamically assign bandwidth to traffic-bearing entities (131, 132, 141, 151, 152, 153) within the ONUs by allocating upstream transmission opportunities (133, 142, 143, 144, 154, 155) to the traffic-bearing entities based on bandwidth demands (211) of the respective traffic-bearing entities and on one or more service parameters of the respective traffic-bearing entities; wherein an assigned bandwidth of a traffic-bearing entity comprises a guaranteed assigned bandwidth (221) and a non-guaranteed assigned bandwidth (224); and wherein the means are further configured to perform, if a sum of the bandwidth demands of the traffic-bearing entities within the PON exceeds an effective available bandwidth of the PON:

- assigning (203), to respective unsaturated traffic-bearing entities having bandwidth demands that exceed the guaranteed assigned bandwidths, non-guaranteed assigned bandwidths (224) proportional to the bandwidth demands.

2. The optical line terminal, OLT, according to claim 1, wherein the assigning further comprises assigning non-guaranteed assigned bandwidths to the respective unsaturated traffic-bearing entities that are proportional to a difference between the bandwidth demands of the respective unsaturated traffic-bearing entities and the guaranteed assigned bandwidths of the respective unsaturated traffic-bearing entities.

3. The optical line terminal, OLT, according to any of the preceding claims, wherein the means are further configured to perform determining (301) the non-guaranteed assigned bandwidths for the respective unsaturated traffic-bearing entities by a single loop recursion (315) over the respective traffic-bearing entities within the PON.

4. The optical line terminal, OLT, according to claim 3, wherein determining the non-guaranteed assigned bandwidths further comprises performing the single loop recursion over the respective traffic-bearing entities in an unordered sequence.

5. The optical line terminal, OLT, according to claim 3 or 4, wherein determining the non-guaranteed assigned bandwidths further comprises determining (301) a surplus bandwidth pool (311) indicative for a portion of the effective available bandwidth of the PON that remains after assigning (201, 202) the guaranteed assigned bandwidths (221) to the respective traffic-bearing entities; and distributing the surplus bandwidth pool among the unsaturated traffic-bearing entities as the non-guaranteed assigned bandwidths.

6. The optical line terminal, OLT, according to claim 2 and 5, wherein the single loop recursion further comprises, for a respective traffic-bearing entity, determining (302) the non-guaranteed assigned bandwidth (312) as a portion of the surplus bandwidth pool proportional to a ratio; wherein a numerator of the ratio comprises a difference between the bandwidth demand of the respective traffic-bearing entity and the guaranteed assigned bandwidth of the respective traffic-bearing entity, and wherein a denominator of the ratio comprises a sum of respective differences between the bandwidth demands and the guaranteed assigned bandwidths of the unsaturated traffic bearing entities.

7. The optical line terminal, OLT, according to any of the preceding claims, wherein the means are further configured to perform determining the bandwidth demand of a respective traffic-bearing entity as the bandwidth that depletes a data queue of the respective traffic-bearing entity within a fixed time.

8. The optical line terminal, OLT, according to any of the preceding claims, wherein the means are further configured to perform determining the bandwidth demand of a respective traffic-bearing entity based on a reported buffer occupancy of the respective traffic-bearing entity, and/or based on data transmitted from the respective traffic-bearing entity to the OLT.

9. The optical line terminal, OLT, according to any of the preceding claims, wherein assigning non-guaranteed assigned bandwidths is limited to unsaturated traffic-bearing entities having a service parameter indicative for being eligible for non-assured bandwidth assignment and/or best effort bandwidth assignment.

10. The optical line terminal, OLT, according to any of the preceding claims, wherein assigning non-guaranteed assigned bandwidths is limited to unsaturated traffic-bearing entities having a service parameter indicative for being eligible for bandwidth-proportional bandwidth assignment.

11. The optical line terminal, OLT, according to any of the preceding claims, wherein the means are further configured to perform assigning non-guaranteed assigned bandwidths proportional to the bandwidth demands if enabled by means of a configuration parameter.

12. The optical line terminal, OLT, according to any of the preceding claims, wherein the means include a dynamic bandwidth allocation, DBA, engine.

13. A computer-implemented method comprising, if a sum of bandwidth demands of traffic-bearing entities within optical network units, ONUs, within a passive optical network, PON, exceeds an effective available bandwidth of the PON:

- assigning, to respective unsaturated traffic-bearing entities having bandwidth demands that exceed guaranteed

EP 4 568 269 A1

assigned bandwidths, non-guaranteed assigned bandwidths (224) proportional to the bandwidth demands of the respective unsaturated traffic-bearing entities; and

wherein an optical line terminal, OLT, configured to communicate with the ONUs in the PON, comprises means configured to dynamically assign bandwidth to traffic-bearing entities (131, 132, 141, 151, 152, 153) within the ONUs by allocating upstream transmission opportunities (133, 142, 143, 144, 154, 155) to the traffic-bearing entities based on a bandwidth demand (211) of the respective traffic-bearing entities and one or more service parameters of the respective traffic-bearing entities; and wherein an assigned bandwidth of a traffic-bearing entity comprises a guaranteed assigned bandwidth (221) and a non-guaranteed assigned bandwidth (224).

14. A data processing system configured to perform the computer-implemented method according to claim 13.

15. A computer program product comprising computer-executable instructions which, when the program is executed by a computer, cause the computer to perform the computer-implemented method according to claim 13.

12

Fig. 1

EP 4 568 269 A1

Fig. 2

EP 4 568 269 A1

EP 4 568 269 A1

201 — Assigning $BW_F$ to traffic-bearing entities

300

202 — Assigning $BW_A$ until $R_A + R_F$ reached or $BW_d$ satisfied ← $BW_d$ — 310

301 — Determining a surplus bandwidth pool

311

$$S_{BW} = C - \sum_{\forall i \in PON} BW_G^i$$

302 — Determining $BW_{NG}$ for traffic-bearing entity i

312

$$BW_{NG}^i = S_{BW} \times \frac{BW_d^i - min(R_F^i + R_A^i, BW_d^i)}{\sum_j BW_d^j - min(R_F^j + R_A^j, BW_d^j)}$$

$i = i + 1$

305

304 — Looped over all unsaturated traffic-bearing entities?  N  Y → END

210

214 — $R_M$

213 — $R_F + R_A$   123

$BW_{NG}$ — 224

212

$BW_A$ — 223   $R_F$

$BW_G$ — 221

$BW_F$ — 222

$R_F$   $R_F + R_A$   $R_M$

**Bandwidth Demand ($BW_d$)**

211

Fig. 3

Fig. 4A

Fig. 4B

EP 4 568 269 A1

16

Fig. 5

| T-CONT | LEGACY FAIRNESS | BANDWIDTH PROPORTIONAL FAIRNESS |
|---|---|---|
| 1 | 85.3301 | 122.4804 |
| 2 | 87.5364 | 127.1674 |
| 3 | 92.9568 | 131.2306 |
| 4 | 98.2157 | 132.6785 |
| 5 | 106.6241 | 134.1633 |
| 6 | 112.2973 | 135.2037 |
| 7 | 120.1864 | 136.5569 |
| 8 | 154.1613 | 139.7547 |
| 9 | 160.8136 | 139.0048 |
| 10 | 234.7072 | 143.0633 |

EP 4 568 269 A1

Fig. 6

Europäisches
Patentamt

European
Patent Office

Office européen
des brevets

**EUROPEAN SEARCH REPORT**

Application Number

EP 23 21 4391

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 489 877 A2 (SAMSUNG ELECTRONICS CO LTD [KR]) 22 December 2004 (2004-12-22) | 1-3,5-8, 12-15 | INV. H04Q11/00 |
| Y | * page 3, paragraph 17 * <br> * page 4, paragraph 27 - page 6, paragraph 38 * <br> * figures 3-5 * | 9-11 | |
| | ----- | | |
| X | ALI M A ET AL: "Dynamic bandwidth allocation for quality-of-service over ethernet PONs", <br> IEEE JOURNAL ON SELECTED AREAS IN COMMUNICATIONS, IEEE SERVICE CENTER, PISCATAWAY, US, <br> vol. 21, no. 9, <br> 1 November 2003 (2003-11-01), pages 1467-1477, XP011103042, <br> ISSN: 0733-8716, DOI: 10.1109/JSAC.2003.818837 <br> * the whole document * | 1-3, 13-15 | |
| | ----- | | |
| A | SARIGIANNIDIS PANAGIOTIS ET AL: "IFAISTOS: A fair and flexible resource allocation policy for next-generation passive optical networks", <br> 2014 6TH INTERNATIONAL CONGRESS ON ULTRA MODERN TELECOMMUNICATIONS AND CONTROL SYSTEMS AND WORKSHOPS (ICUMT), IEEE, <br> 6 October 2014 (2014-10-06), pages 7-14, XP032716275, <br> DOI: 10.1109/ICUMT.2014.7002071 <br> [retrieved on 2015-01-06] <br> * IV. IFAISTOS; <br> Fig. 1; * | 1-15 | TECHNICAL FIELDS SEARCHED (IPC) <br><br> H04Q |
| | ----- | | |
| | -/-- | | |

The present search report has been drawn up for all claims

| Place of search | Date of completion of the search | Examiner |
|---|---|---|
| Munich | 26 April 2024 | Carballo da Costa, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

| Europäisches Patentamt European Patent Office Office européen des brevets | **EUROPEAN SEARCH REPORT** | **Application Number** EP 23 21 4391 |
| --- | --- | --- |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| Y | "10-Gigabit-capable symmetric passive optical network (XGS-PON)", ITU-T DRAFT ; STUDY PERIOD 2013-2016, INTERNATIONAL TELECOMMUNICATION UNION, GENEVA ; CH, vol. 2/15, 21 January 2016 (2016-01-21), pages 1-301, XP044147645, [retrieved on 2016-01-21] | 9-11 | |
| A | * C.7.3 Reference model of dynamic bandwidth assignment; C.7.3.3 Components of assigned bandwidth; C.7.3.4 Guaranteed bandwidth assignment; C.7.3.5 Rate-proportional assignment of additional bandwidth; Equations C.7-8, C.7-9 and C.7-11 * | 1-8, 12-15 | |
| | ----- | | |
| | | | TECHNICAL FIELDS SEARCHED (IPC) |

The present search report has been drawn up for all claims

| Place of search | Date of completion of the search | Examiner |
| --- | --- | --- |
| Munich | 26 April 2024 | Carballo da Costa, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
&: member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 4391

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2024

| Patent document cited in search report | | Publication date | Patent family member(s) | | Publication date |
|---|---|---|---|---|---|
| EP 1489877 | A2 | 22-12-2004 | CN | 1574709 A | 02-02-2005 |
| | | | EP | 1489877 A2 | 22-12-2004 |
| | | | JP | 3844764 B2 | 15-11-2006 |
| | | | JP | 2005012800 A | 13-01-2005 |
| | | | KR | 20040108135 A | 23-12-2004 |
| | | | US | 2004252714 A1 | 16-12-2004 |

EPO FORM P0459

For more details about this annex : see Official Journal of the European Patent Office, No. 12/82